# EUROPEAN PATENT SPECIFICATION

(11) **EP 2 247 687 B1**
(45) Date of publication and mention of the grant of the patent: **25.07.2018**
(21) Application number: 09707070.0
(22) Date of filing: 27.01.2009
(51) Int. Cl.: C09K 8/08, C09K 8/12, C09K 8/60, C09K 8/68

(54) **COMPOSITIONS AND METHODS OF TREATING HIGH TEMPERATURE SUBTERRANEAN FORMATIONS**
ZUSAMMENSETZUNGEN UND VERFAHREN ZUR BEHANDLUNG VON HOHE TEMPERATUREN AUFWEISENDEN UNTERIRDISCHEN FORMATIONEN
COMPOSITIONS ET PROCÉDÉS DE TRAITEMENT DE FORMATIONS SOUTERRAINES À TEMPÉRATURE ÉLEVÉE

(30) Priority: 28.01.2008 US 20755; 28.01.2008 US 20671
(43) Date of publication of application: 10.11.2010
(73) Proprietor: Baker Hughes, a GE company, LLC, Houston, TX 77073 (US)
(72) Inventor: CARMAN, Paul, S., Spring TX 77379 (US); DAWSON, Jeffrey, C., Conroe TX 77304 (US)
(74) Representative: Lucas, Brian Ronald
(86) International application number: PCT/US2009/032142
(87) International publication number: WO 2009/097286

(56) References cited:
- EP-A- 0 658 612
- DE-A1-102005 056 436
- US-A- 3 146 200
- US-A- 3 225 000
- US-A- 4 624 795
- US-A1- 2004 244 975
- US-B1- 6 395 853

## Description

### BACKGROUND OF THE INVENTION

### Field of the Invention

The invention relates to methods and compositions for treating high temperature subterranean formations. More particularly, it relates to methods and compositions for treating a subterranean formation penetrated by a wellbore into which a high temperature well treatment fluid is injected at temperatures of up to 500°F (260°C). The present invention also relates to the use of polymeric compounds as thermal decomposition prevention additives for well treatment fluids.

### Description of the Related Art

The continued exploration for hydrocarbon-containing subterranean formations is frequently requiring operators to drill significantly deeper than prior drilling operations. Besides drilling deeper, operators are always trying to enhance hydrocarbon production. One way of enhancing hydrocarbon production from many formations is by hydraulic fracturing. In the hydraulic fracturing process, a viscous fracturing fluid is injected into the wellbore at such a rate and pressure so that a crack or fracture is opened into the surrounding formation. Typically, hydraulic fracturing fluids contain guar gum or guar gum derivatives or viscoelastic surfactants as thickeners to assist in proppant transport, friction reduction, fluid loss control, and controlling fracture geometry. The hydraulic fracturing fluids generally transport proppant into the fracture to prevent the fracture from fully closing. Besides being able to place the proppant in the fracture, the fluid must be able to degrade by lowering its viscosity so that a low viscosity fluid results that can be easily cleaned out of the fracture just prior to hydrocarbon production. As the drilling depths continue to increase, the formation temperatures also increase. Unfortunately, as temperatures exceed 325 °F (162.8 °C), many guar-based fracturing fluids are ineffective because they lose their viscosity in part or in whole and therefore become less effective or completely ineffective. Many guar-based fracturing fluids degrade at rates preventing optimum proppant placement, fluid loss control, or fracture geometry.

At high temperatures, guar-based polymers readily undergo auto-degradation by a number of methods, usually within periods of time shorter than what is necessary to complete the fracturing treatment. The degradation generally gets worse as the temperatures continue to increase. Increasing temperatures exasperates this behavior. Most degradation results in the cleavage of the polymer chains, which simultaneously reduces the fluid's viscosity. This can be due to oxidation from residual amounts of air entrained in the fluid, thermal induced cleavage of the acetal linkage along the polymer backbone, hydrolysis of the polymer, or a combination thereof.

Besides use as fracturing fluids, well treatment fluids are useful in hydrocarbon completion operations in various functions, such as being proppant carriers in fracturing processes or as being fluid loss control agents in well completion and workover operations. Well treatment fluids often contain gels that are formed from polymers mixed with water.

As operators continue to drill significantly deeper to access hydrocarbon bearing formations, the conditions in which well treatment fluids must operate often exceeds the maximum operational limits of conventional well treatment fluids. For example, as the drilling depths continue to increase, so do the formation temperatures in which well treatment fluids must operate. Polymeric gels, particularly guar-based polymeric gels, readily undergo auto-degradation by a number of methods at high temperatures, usually within periods of time that are shorter than necessary to complete many well treatment processes. The degradation generally gets worse as the temperatures continue to increase. Most degradation results in the cleavage of the polymer chains, which simultaneously reduces the fluid's viscosity. This can be due to oxidation from residual amounts of air entrained in the fluid, thermal induced cleavage of the acetal linkage along the polymer backbone, or both.

Well treatment fluids use both high pH (alkaline) and low pH (acidic) conditions to crosslink and maintain viscosity. However at elevated temperatures of greater than 300 °F (148.9 °C), acidic or basic hydrolysis can occur which can degrade the viscosity of the well treatment fluid and of the well treatment fluid itself. Others have attempted to reduce thermal degradation of polymeric gels by adding a gel stabilizer to the polymeric gel. For example, a stabilizer containing oxime has been used in systems having temperatures as high as 302°F (150°C). Unfortunately, many subterranean formations have temperatures well above this level.

A need exists for well treatment fluids containing polymeric gels that are capable of being stabilized at temperatures as high as 500°F (260°C) as deeper wells are explored. A need also exists for fracturing fluids that can be used in the deeper and hotter formations that are in operation while simultaneously being able to degrade in a controlled manner when the fracturing process is complete. It is desirable for such fracturing fluids to be stable to enable the fracturing fluids to travel further distances within the fractures.

US 3146200 (Goldstein) explains that the stability of guar gum is an important problem is where it is used as a viscosity imparting agent in oil well drilling and in oil well workover fluid Galactomannan gums are used as suspending agents, stabilizers or viscosity regulating agents in drilling fluids. While their use has proved extremely advantageous, high temperature conditions encountered in the bore hole often cause rapid degradation of the galactomannans. The disclosed invention provided a colloidal aqueous solution of galactomannan materials having a decreased rate of degradation at elevated temperatures comprising water, a galactomannan in an amount sufficient to increase the viscosity of the solution and a salt from the group consisting of water-soluble metal sulfites, thiosulfates and arsenites which is effective in retarding degradation of the galactomannan material in the presence of water at elevated temperatures, said solution having a pH of from about 5.5 to about 10, the salt being present in an amount sufficient to decrease the rate of degradation of the gum at elevated temperatures.

EP-A-0658612 (Dobson) is concerned with oil and gas well drilling fluids, completion fluids, workover fluids, and well servicing fluids and discloses that the thermal stability of fluids containing polysaccharides is enhanced by incorporating into the fluids magnesium oxide and a thiosulfate salt selected from the group consisting of sodium thiosulfate, ammonium thiosulfate, potassium thiosulfate, calcium thiosulfate, magnesium thiosulfate, ferrous thiosulfate, and mixtures thereof.

US 4624795 (Dawson) discloses an aqueous gel useful in fracture acidizing of oil and gas bearing formations and discloses that copolymers of a predominant proportion of an olefinically unsaturated sulfonic acid, an acrylamide, a vinyl phosphonic acid, and optionally other copolymerizable monomers, form aqueous acid gel compositions when added to the aqueous acid along with a gelling agent selected from titanium or zirconium compounds, and retarded gel destabilizing compounds containing fluoride, sulphate or phosphate anions. The apparent viscosity and time of stability of the acid gel composition is controlled by the addition of these essential ingredients. The resulting acid gel composition can be used in very strong acids with no degradation and at high temperatures often countered in many wells, with no viscosity breakdown other than when and as designed into the system. Thus the acid gel composition has moderately high viscosities with substantial shear stability at temperatures up to about 120°C.

US 2004/244975 (Heier, Bitex) reports a finding that in reducing or completely eliminating water influx to a mineral oil or natural gas production borehole by introducing into this borehole an aqueous solution of a copolymer, water-soluble copolymers based on acrylamidoalkylenesulfonic acid, N-vinylamides, acrylamide and vinylphosphonic acid, which were crosslinked during the application, were distinguished by high adsorption onto the rocks of a deposit, had elastic extension-compression behavior, exhibited particular stability to salts in deposit waters and could be used over a wide temperature range, in particular at relatively high temperatures. The thermal stability could be controlled by the ratio of acrylamide to acrylamidoalkylenesulfonic acid. It was furthermore reported that the increase in the proportion of acrylamidoalkylenesulfonic acid leads to increased stability of the crosslinked gel at elevated temperatures.

### SUMMARY OF THE INVENTION

In view of the foregoing, a high temperature well treatment fluid that is capable of fracturing a subterranean formation in temperatures of up to 500°F (260°C) is provided as an embodiment of the present invention. The fluid comprises:
(a) water;
(b) a high molecular weight copolymer derived from acrylamide, acrylamidomethylpropanesulfonic acid, and vinyl phosphonate;
(c) a crosslinking agent;
(d) a pH buffer that maintains a pH of the high temperature well treatment fluid in a range of 4.5 to 5.25; and
(e) a stabilizer which is an electron-donating compound selected from phenothiazine, phenothiazine derivatives and combinations thereof, or a stabilizer as aforesaid together with a secondary stabilizer comprising sodium thiosulfate.

In an aspect, the copolymer comprises 30 - 80 wt. % acrylamide, 20 - 50 wt. % acrylamidomethylpropanesulfonic acid, and 1 - 5 wt. % vinyl phosphonate.

Other preferred features are set out in the appended claims to which attention is directed.

Other additives that are useful in high temperature well treatment fluids can also be used in embodiments of the present invention. Such additives can include additional monomers that can be copolymerized with the high molecular weight polymers of the high temperature well treatment fluids, stabilizers to help the high temperature well treatment fluids perform for extended periods of time, crosslinking agents to help increase the viscosity of the high temperature well treatment fluids, breakers to help break down the high temperature well treatment fluids, surfactants that help with hydration of the high temperature well treatment fluids, and the like. Other suitable compounds that are useful in high temperature well treatment fluids, such as proppant and other additives, will be apparent to those of skill in the art and are to be considered within the scope of the present invention.

The invention also provides a method for treating a well penetrating a subterranean formation having a temperature of up to 500°F (260°C) comprising the step of contacting a high temperature well treatment fluid as defined as above with at least a portion of the subterranean formation.

### BRIEF DESCRIPTION OF THE DRAWINGS

FIG. 1 is a graph of the apparent viscosity of the high temperature well treatment fluid with and without a breaker versus time at various temperatures;
FIG. 2 is a graph of the apparent viscosity of the high temperature well treatment fluid with and without a breaker versus time at 350°F (176.7°C);
FIG. 3 is a graph of the apparent viscosity of the high temperature well treatment fluid with various amounts of copolymer and temperatures;
FIG. 4 is a graph of the apparent viscosity of two guar-based well treatment fluids made with and without an electron donating compound comprising phenothiazine versus time in accordance with embodiments of the present invention;
FIG. 5 is a graph of the apparent viscosity of a high molecular weight synthetic polymer-based well treatment fluid made with and without an electron donating compound comprising phenothiazine versus time in accordance with embodiments of the present invention; and
FIG. 6 is another graph of the apparent viscosity of a high molecular weight synthetic polymer-based well treatment fluid made with and without an electron donating compound comprising phenothiazine versus time in accordance with embodiments of the present invention.

While the invention is susceptible to various modifications and alternative forms, specific embodiments have been shown by way of example in the drawings and will be described in detail herein. However, it should be understood that the invention is not intended to be limited to the particular forms disclosed. Rather, the intention is to cover all modifications, equivalents and alternatives falling within the invention as defined by the appended claims.

### DESCRIPTION OF ILLUSTRATIVE EMBODIMENTS

Illustrative embodiments of the invention are described below as they might be employed in the hydrocarbon recovery operation and in the treatment of well bores. In the interest of clarity, not all features of an actual implementation are described in this specification. It will of course be appreciated that in the development of any such actual embodiment, numerous implementation-specific decisions must be made to achieve the developers' specific goals, which will vary from one implementation to another. Moreover, it will be appreciated that such a development effort might be complex and time-consuming, but would nevertheless be a routine undertaking for those of ordinary skill in the art having the benefit of this disclosure. Further aspects and advantages of the various embodiments of the invention will become apparent from consideration of the following description.

A high temperature well treatment fluid for fracturing a subterranean formation having a temperature up to 500°F (260°C), comprises water; a high molecular weight copolymer derived from acrylamide, acrylamidomethylpropanesulfonic acid, and vinyl phosphonate; a crosslinking agent; a pH buffer that maintains a pH of the high temperature well treatment fluid in a range of 4.5 to 5.25; and a stabilizer which is an electron-donating compound selected from phenothiazine, phenothiazine derivatives and combinations thereof, or a stabilizer as aforesaid together with a secondary stabilizer comprising sodium thiosulfate. In an aspect, the high molecular weight synthetic copolymer has a K-value of greater than 375. In an aspect, the K-value ranges between 50 and 750; or alternatively, between 150 to 350. The K-value (i.e. Fikentscher's K-value) is a measure of a polymer's average molecular weight. The test method generally used by those skilled in the art to calculate the K-value is determined by ISO 1628-2 (DIN 53726). In embodiments of the present invention, the high temperature well treatment fluid comprises 25 wt. % of the high molecular weight copolymer in an emulsion. The high molecular weight copolymer in emulsion can be present in a range of 10 gallons (38 litres) per 1000 gallons (3785 litres) high temperature well treatment fluid at temperatures of less than 350 °F (176.7 °C) to 25 gallons (95 litres) per 1000 gallons (3785 litres) high temperature well treatment fluid at 500°F (260°C). The concentration of the high molecular weight synthetic copolymer depends upon the temperature of the subterranean formation and the duration in which the high molecular weight synthetic copolymer will be exposed to the elevated temperatures. In general, more high molecular weight synthetic copolymer is required at higher temperatures than at the lower temperatures.

In an aspect, the copolymer is derived from 20 - 90 wt. % acrylamide, 9 - 80 wt. % acrylamidomethylpropanesulfonic acid, and 0.1 - 20 wt. % vinyl phosphonate; alternatively, 30 - 80 wt. % acrylamide, 25 - 60 wt. % acrylamidomethylpropanesulfonic acid, and 0.2 - 10 wt. % vinyl phosphonate; alternatively, 40 - 70 wt. % acrylamide, 30 - 40 wt. % acrylamidomethylpropanesulfonic acid, and 1 - 3 wt. % vinyl phosphonate; or alternatively, 50 wt. % acrylamide, 30 wt. % acrylamidomethylpropanesulfonic acid, 2 wt. % vinyl phosphonate, and a remainder of copolymers of acrylamide and acrylamidomethylpropanesulfonic acid.

The pH buffer of the present invention helps maintain a low pH of the high temperature well treatment fluid in a range of 4.5 to 5.25. In an aspect, the pH buffer comprises acetic acid and sodium acetate. In another aspect, the pH buffer comprises acetic acid, sodium acetate, formic acid, or combinations thereof. The amount of pH buffer that is needed is the amount that will effectively maintain a pH of the high temperature well treatment fluid in a range of 4.5 to 5.25; or alternatively, in a range of 4.75 to 5; or alternatively, 5. In an aspect, the pH buffer is a true pH buffer, as opposed to a pH adjuster, as will be understood by those of skill in the art. The low pH of the systems and methods described herein aid in clean-up of the fluid after well treatment processes.

At temperatures above 400 °F (204.4 °C), a pH buffer comprising acetic acid and sodium acetate having a pH of 5 at 25% can be used. At temperatures below 400°F (204.4°C), other pH buffers can be used, such as acetic acid and formic acid buffers. Generally, any pH buffer capable of maintaining a pH of the high temperature well treatment fluid within in a range of 4.5 to 5.25 and without interfering with the remaining components of the high temperature well treatment fluids can be used. Other suitable pH buffers will be apparent to those of skill in the art and are to be considered within the scope of the present invention.

The pH buffer comprising acetic acid and sodium acetate having a pH of 5 can be used in a concentration ranging from 1 gallon (3.8 litres) per 1000 gallons (3785 litres) high temperature well treatment fluid to 3 gallons (11 litres) per 1000 gallons (3785 litres) high temperature well treatment fluid, depending upon the temperature of the subterranean formation.

The high molecular weight synthetic copolymer can be further copolymerized with other monomers to provide various advantages related to the stability of the high temperature well treatment fluid. Similar to guar-based high temperature well treatment fluids, the viscosity of the high temperature well treatment fluid of the present invention can be significantly enhanced when first copolymerized with small amounts of monomers and crosslinked, at the wellsite, with transition metals, such as iron, titanium, zirconium, chromium, hafnium, aluminum, and combinations thereof. Suitable monomers that can be copolymerized with the high molecular weight synthetic polymer include monomers selected from the group consisting of an alkali metal of acrylamidomethylpropanesulfonic acid, an ammonium salt of acrylamidomethylpropanesulfonic acid, styrene sulfonate, vinyl sulfonate, N-vinylpyrolidone, N-vinylformamide, N-vinylacetamide, N,N-diallylacetamide, methacrylamide, acrylamide, N,N-dimethylacrylamide, methacrylamide, a divalent cation from calcium salt, a divalent cation from magnesium salt, and combinations thereof. For example, alkali metal or ammonium salts of acrylamidomethylpropanesulfonic acid (AMPS), styrene sulfonate or vinyl sulfonate can be copolymerized to add salt tolerance to the high molecular weight synthetic polymer. Divalent cations from calcium salt and magnesium salt are also useful for adding salt tolerance to the high molecular weight synthetic polymer. As another example, monomers such as N-vinylamides, N-vinylpyrolidone, N-vinylformamide, N-vinylacetamide, and N-diallylacetamide can also be copolymerized with the high molecular weight synthetic polymer to assist in proppant transport by adsorbing onto the proppant surface. The copolymers of the high molecular weight synthetic copolymer can be made by any polymerization method necessary to produce high molecular weight copolymers. A particularly effective method of producing the copolymers is by invert polymer emulsion because it can be easily metered into a flowing stream of water during fracturing processes and it can be made to rapidly hydrate, which may reduce the amount of equipment needed at the wellsite.

The high temperature well treatment fluid of the present invention includes a stabilizer to help the high temperature well treatment fluids perform for extended periods of time. One manner in which stabilizers assist in extending run times of high temperature well treatment fluids is by maintaining the viscosity of the high temperature well treatment fluid for longer periods of time than the high temperature well treatment fluid would be capable of doing without the stabilizer. In an aspect, the stabilizer is phenothiazine alone or in combination with sodium thiosulfate. The use of phenothiazine as a stabilizer is described herein. Another suitable stabilizer is a gel stabilizer that is commercially available as GS-1L that contains sodium thiosulfate from BJ Services Company.

The amount of stabilizer that can be used includes an effective amount that is capable of maintaining viscosity, i.e. preventing thermal degradation, of the high temperature well treatment fluid long enough to perform the fracturing process.

In an aspect, the high temperature well treatment fluid of the present invention can also include a crosslinking agent. A suitable crosslinking agent can be any compound that increases the viscosity of the high temperature well treatment fluid by chemical crosslinking, physical crosslinking, or any other mechanisms. For example, the gellation of the high molecular weight synthetic copolymer can be achieved by crosslinking the high molecular weight synthetic copolymer with metal ions including boron, zirconium, and titanium containing compounds, or mixtures thereof. One class of suitable crosslinking agents is zirconium-based crosslinking agents. Suitable crosslinking agents can include zirconium oxychloride, zirconium acetate, zirconium lactate, zirconium malate, zirconium glycolate, zirconium lactate triethanolamine, zirconium citrate, titanium lactate, titanium malate, titanium citrate, titanium, aluminum, iron, antimony, a zirconate-based compound, zirconium triethanolamine, an organozirconate, or combinations thereof. XLW-14 is a particularly suitable zirconate-based crosslinking agent that is commercially available from BJ Services Company and described in U.S. Patent No. 4,534,870.

The amount of the crosslinking agent needed in the high temperature well treatment fluid depends upon the well conditions and the type of treatment to be effected, but is generally in the range of from 10 ppm to 1000 ppm of metal ion of the crosslinking agent in the high molecular weight synthetic polymer fluid. In an aspect, the amount of crosslinking agent that can be used includes an effective amount that is capable of increasing the viscosity of the high temperature well treatment fluid to enable it to perform adequately in fracturing processes. In some applications, the aqueous polymer solution is crosslinked immediately upon addition of the crosslinking agent to form a highly viscous gel. In other applications, the reaction of the crosslinking agent can be retarded so that viscous gel formation does not occur until the desired time.

When zirconium is used as a crosslinking agent, zirconium has a built-in delay and is used from 1 gallon (3.8 litres) per 1000 gallons (3785 litres) to 2 gallons (7.6 litres) per 1000 gallons (3785 litres) depending on the temperature and high molecular weight synthetic polymer concentration in the high temperature well treatment fluid. If extra stability time is required, an additional stabilizer, such as sodium thiosulfate (e.g., GS-1L from BJ Services), can be used in a range of 1 gallon (3.8 litres) per 1000 gallons (3785 litres) high temperature well treatment fluid to 3 gallons (11 litres) per 1000 gallons (3785 litres) high temperature well treatment fluid.

The high temperature well treatment fluid of the present invention can also include a surfactant to aid in well treatment processes. Surfactants typically aid in the hydration of the high molecular weight synthetic polymer. Without the surfactant, the high temperature well treatment fluids of the present invention can take up to 20 to 30 minutes to adequately hydrate. With the addition of the surfactant, the hydration time is substantially reduced. With the surfactant, the hydration can take less than 5 minutes. 90 - 95 % of the high temperature well treatment fluid of the present invention can be hydrated in 1 to 2 minutes with a suitable surfactant. The type and concentration of the surfactant can control the hydration time of the high temperature well treatment fluid. Any suitable surfactant can be used, as will be apparent to those of skill in the art. In an aspect, a nonionic surfactant such as an ethoxylated alcohol can be used. A suitable surfactant that can be used in the present invention is a proprietary blend of two different surfactants commercially available from Rhodia. The Rhodia blend contains 50 wt. % Rhodasurf BC 720, which is an alkoxypoly(ethyleneoxy)ethanol surfactant, and an ethoxylated long chain alcohol having between 10 and 18 carbon molecules. In an aspect, the surfactant comprises alkoxypoly(ethyleneoxy)ethanol, an ethoxylated alcohol having from 10 to 18 carbon molecules, and combinations thereof. Effective types and amounts of suitable surfactants will be apparent to those of skill in the art and are to be considered within the scope of the present invention.

In an aspect of the present invention, the high temperature well treatment fluid also includes a breaker that is capable of degrading the high temperature well treatment fluid in a controlled manner to assist operators in clean up and removal of the high temperature well treatment fluid when the well treatment process is complete. For example, the breakers can assist in clean-up efforts after fracturing treatments. Viscometer tests have shown that most breakers that contain oxidizing agents are useful in the degradation of the fluid. Suitable oxidizing agents can include sodium bromate, ammonium persulfate, sodium persulfate, sodium perborate, sodium percarbonate, calcium peroxide, magnesium peroxide and sodium periodate. Controlled degradation can be recognized because it results in a simultaneous and controlled reduction in fluid viscosity. Testing suggests that the stability of the high temperature well treatment fluid of the present invention, even with the intentional addition of the breakers that contain oxidizing agents, greatly exceeds that obtained by guar-based well treatment fluids, allowing optimized treatments to be employed at well temperatures ranging from 250°F (121.1°C) to 500°F (260°C).

In an aspect, the breaker comprises sodium bromate, either as is or encapsulated. Sodium bromate has been shown to easily degrade the high temperature well treatment fluid in a controlled manner. In an aspect, the breaker comprises sodium bromate, ammonium persulate, sodium persulfate, sodium perborate, sodium percarbonate, calcium peroxide, magnesium peroxide, sodium periodate, an alkaline earth metal percarbonate, an alkaline earth metal perborate, an alkaline earth metal peroxide, an alkaline earth metal perphosphate, a zinc peroxide, a zinc perphosphate, a zinc perborate, a zinc percarbonate, a boron compound, a perborate, a peroxide, a perphosphate, or combinations thereof. In an aspect, the breaker comprising sodium bromate, ammonium persulate, sodium persulfate, sodium perborate, sodium percarbonate, calcium peroxide, magnesium peroxide, sodium periodate, or combinations thereof. Other types and amounts of suitable breakers that can be used in the present invention will be apparent to those of skill in the art are to be considered within the scope of the present invention.

When sodium bromate is used to break the high temperature well treatment fluid of the present invention, the concentration of the sodium bromate can be from 0.5 ppt high temperature well treatment fluid to 20 ppt (0.25 - 10 grams per kg) high temperature well treatment fluid. The concentration will depend on if the sodium bromate is run as a solid, a solution, or encapsulated, such as High Perm BR™ Gel Breaker from BJ Services Company.

The pH buffers, stabilizers, crosslinking agents, breakers, monomers, and other additives described herein can be used in the method embodiments as well as the compositional embodiments of the present invention. Other suitable compounds for high temperature well treatment fluids, such as proppant and other additives, will be apparent to those of skill in the art and are to be considered within the scope of the present invention.

Besides the compositions of the high temperature well treatment fluid, methods of fracturing a subterranean formation having a temperature of up to 500°F (260°C) are provided as embodiments of the present invention. In one embodiment, a high temperature well treatment fluid is contacted with at least a portion of the subterranean formation at pressures sufficient to fracture the subterranean formation. In an aspect, the high temperature well treatment fluid includes water; a high molecular weight polymer comprising acrylamide, acrylamidomethylpropanesulfonic acid, and vinyl phosphonate; a crosslinking agent; and a pH buffer that maintains a pH of the high temperature well treatment fluid in a range of 4.5 to 5.25.

Another method of fracturing a subterranean formation is provided as another embodiment of the present invention. In this embodiment, water is contacted with a high molecular weight copolymer derived from acrylamide, acrylamidomethylpropanesulfonic acid, and vinyl phosphonate to form a water-soluble polymer that is then contacted with a crosslinking agent and a pH buffer to produce a gelling fluid. The gelling fluid is then contacted with at least a portion of the subterranean formation at pressures sufficient to fracture the formation. As with other embodiments of the present invention, the pH buffer maintains a pH of the gelling fluid in a range of 4.5 to of 5.25.

The compositions and methods described herein perform well when compared with traditional guar-based well treatment fluids. Well treatment fluids require sufficient viscosity that lasts long enough for the well treatment fluid to complete the well treatment process, such as fracturing. The compositions and methods describe herein are stabilized for much longer than most prior art well treatment fluids at elevated temperatures. For example, the high temperature well treatment fluid of the present invention can be pumped at a temperature of up to 500°F (260°C) for a period of up to 2 hours. The high temperature well treatment fluid can be pumped at a temperature of up to 425°F (218.3°C) for a period of up to 4 hours. The high temperature well treatment fluid can be pumped at a temperature of up to 400°F (204.4°C) for a period of up to 6 hours.

As an embodiment of the present invention, a high temperature well treatment fluid is provided. In this embodiment, the high temperature well treatment fluid includes a polymeric gel and an electron donating compound comprising phenothiazine. The electron donating compound comprising phenothiazine is present in the high temperature well treatment fluid in an effective gel stabilizing amount that prevents thermal degradation of the polymeric gel at temperatures of up to 500°F (260°C). Phenothiazine has a molecular structure as follows:

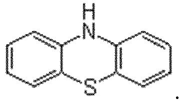

As discussed herein, hydrolysis can occur when traditional polymeric gels are exposed to elevated temperatures of greater than 300°F (148.9°C). The hydrolysis process can be slowed down by protecting the site of the degradation with the electron donating compound. The electron donating compound of the present invention comprises phenothiazine, which is a very good antioxidant and free radical scavenger. Phenothiazine can donate electrons to satisfy charge of surrounding molecules. The electron donating compound functions as a high temperature stabilizer for the high temperature well treatment fluid. Phenothiazine is also an effective chain terminator because it has a sufficiently high molecular weight to terminate further reactions.

Phenothiazine is commonly used an intermediate chemical for various psychotropic drugs, as well as an insecticide. Phenothiazine, which is also called dibenzothiazine or thiodiphenylamine, can be prepared by fusing diphenylamine with sulfur. Other suitable methods of preparing phenothiazine will be apparent to those of skill in the art and are to be considered within the scope of the present invention.

In an aspect, phenothiazine can include various phenothiazine derivatives. The phenothiazine can include unsubstituted phenothiazine, unsubstituted phenothiazine 5-oxide derivative, unsubstituted phenothiazine hydrohalogenide derivative, alkyl-substituted phenothiazine, aryl-substituted phenothiazine, aroyl-substituted phenothiazine, carboxyl-substituted phenothiazine, halogen-substituted phenothiazine, N-(dialkylaminoalkyl)-substituted phenothiazine, phenothiazine-5-oxide, alkyl-substituted phenothiazine-5-oxide, aryl-substituted phenothiazine-5-oxide, aroyl-substituted phenothiazine-5-oxide, carboxyl-substituted phenothiazine-5-oxide, halogen-substituted phenothiazine-5-oxide, N-(dialkylaminoalkyl)-substituted phenothiazine-5-oxide, the hydrochlorides of these compounds, or combinations thereof. In another aspect, phenothiazine can include phenothiazine, 3-phenylphenothiazine, N-phenylphenothiazine, phenothiazine-5-oxide, 10,10'-diphenylphenothiazine, n-benzoylphenothiazine, 7-benzoylphenothiazine, 3,7-difluorophenothiazine, N-ethylphenothiazine, 2-acetylphenothiazine, 3,7-dioctylphenothiazine, N-methylphenothiazine-5-oxide, N-acetylphenothiazine, N-(2-diethylaminoethyl)-phenothiazine, N-(2-dimethylaminopropyl)-phenothiazine, N-(2-dimethylaminopropylphenothiazine)-hydrochloride, N-octadecylphenothiazine, N-propylphenothiazine, or combinations thereof. Any of the phenothiazine compounds described herein can be used as phenothiazine in embodiments of the present invention.

In an embodiment, the electron donating compound comprising phenothiazine can be present in a range of 100 ppm to 250 ppm of the high temperature well treatment fluid; alternatively, in a range of 110 ppm to 200 ppm; alternatively, in a range of 120 ppm to 150 ppm; or alternatively, in a range of 120 ppm to 140 ppm.

The electron donating compound comprising phenothiazine of the present invention can be used with various types of polymeric gels that are polymers crosslinked by ions. For example, the polymeric gel can be derived from a crosslinked polymer selected from the group consisting of galactomannan gums and their derivatives, glucomannan gums and their derivatives, guar gum, locust bean gum, cara gum, carboxymethyl guar, hydroxyethyl guar, hydroxypropyl guar carboxymethylhydroxyethyl guar, carboxymethylhydroxypropyl guar cellulose, cellulose derivatives, hydroxypropyl cellulose, hydroxymethyl cellulose, hydroxyethyl cellulose, carboxymethyl cellulose, acrylamide, polyvinyl alcohol, a copolymer of acrylamide, and combinations thereof. In an aspect, the polymeric gel includes a high molecular weight copolymer derived from acrylamide. Use of a high molecular weight copolymer derived from acrylamide is described herein. The polymeric gels can also be used in the method embodiments of the present invention described.

The phenothiazine can be supplied at a concentration of 40 pounds (18 kg) per 1000 gallons (3785 litres) well treatment fluid to sufficiently stabilize the well treatment fluid at 400°F (204.4°C). Because of the shorter pumping times that are required at temperatures of less than 350°F (176.7°C), less phenothiazine can be used. For example, 30 pounds (13.6 kg) per 1000 gallons (3785 litres) well treatment fluid is sufficient to stabilize the well treatment fluid at temperatures of less than 350°F (176.7°C). In another aspect, the phenothiazine can be present in an amount effective to provide a gelled composite throughout the use of the high temperature well treatment fluid in oilfield hydraulic fracturing, drilling, completion, or workover operations.

Because phenothiazine is not soluble in water, a solution is necessary to deliver the chemical to well treatment fluids. Several solvents, including glycol ethers and esters, can be used to dissolve the phenothiazine. It was calculated that to effectively stabilize a fluid system a concentration of 120 ppm phenothiazine in high temperature well treatment fluid was needed based upon stability data of the high temperature well treatment fluid. A suitable concentration of the electron donating compound comprising phenothiazine can be present in a range of 100 ppm to 250 ppm of the high temperature well treatment fluid; alternatively, in a range of 110 ppm to 200 ppm; alternatively, in a range of 120 ppm to 150 ppm; or alternatively, in a range of 120 ppm to 140 ppm. It is believed that solutions around 9 wt. % to 10 wt. % of phenothiazine in solution provided the best concentration for additive loadings and pour point. Toluene can also be used as a solvent to dissolve the phenothiazine. A suitable solvent is commercially available as Arcosolve® DPM, which contains dipropylene glycol methyl ether. In an aspect, the solvent is toluene, a glycol ether, a glycol ester, or combinations thereof. Other suitable solvents and effective amounts of such solvents will be apparent to those of skill in the art and are to be considered within the scope of the present invention.

The high temperature well treatment fluid can include various additives along with the polymeric gel and electron donating compound comprising phenothiazine. In an aspect, the high temperature well treatment fluid further includes a crosslinking agent in an amount sufficient to crosslink the polymeric gel. A suitable crosslinking agent can be any compound that increases the viscosity of the high temperature well treatment fluid by chemical crosslinking, physical crosslinking, or any other mechanisms. For example, the gellation of the polymer can be achieved by crosslinking the high molecular weight synthetic polymer with metal ions including boron, zirconium, and titanium containing compounds, or mixtures thereof. One class of suitable crosslinking agents is zirconium-based crosslinking agents. In another aspect, the crosslinking agent includes zirconium oxychloride, zirconium acetate, zirconium lactate, zirconium malate, zirconium glycolate, zirconium lactate triethanolamine, zirconium citrate, titanium lactate, titanium malate, titanium citrate, titanium, aluminum, iron, antimony, a zirconate-based compound, zirconium triethanolamine, an organozirconate, or combinations thereof. Other suitable crosslinking agents will be apparent to those of skill in the art and are to be considered within the scope of the present invention.

The amount of the crosslinking agent needed in the high temperature well treatment fluid depends upon the well conditions and the type of treatment to be effected, but is generally in the range of from 10 ppm to 1000 ppm of metal ion of the crosslinking agent in the high molecular weight synthetic polymer fluid. In some applications, the aqueous polymer solution is crosslinked immediately upon addition of the crosslinking agent to form a highly viscous gel. In other applications, the reaction of the crosslinking agent can be retarded so that viscous gel formation does not occur until the desired time.

When zirconium is used as a crosslinking agent, zirconium has a built-in delay and is used from 1 gallon (4.55 litres) per 1000 gallons (3785 litres) to 2 gallons (9 litres) per 1000 gallons (3785 litres) depending on the temperature and high molecular weight synthetic polymer concentration in the high temperature well treatment fluid. If extra stability time is required, an additional secondary stabilizer, such as sodium thiosulfate (e.g., GS-1L from BJ Services), can be used in a range of 1 gallon (4.55 litres) per 1000 gallons (3785 litres) high temperature well treatment fluid to 3 gallons (13.6 litres) per 1000 gallons (3785 litres) high temperature well treatment fluid.

In an aspect of the present invention, the high temperature well treatment fluid can also include a breaker that is capable of degrading the high temperature well treatment fluid in a controlled manner to assist operators in clean up and removal of the high temperature well treatment fluid when the well treatment process is complete. For example, the breakers can assist in clean-up efforts after fracturing treatments.

Suitable breakers that can be used in the present invention will be apparent to those of skill in the art. In an aspect, the breaker comprises sodium bromate, either as is or encapsulated. In an aspect, the breaker comprises sodium bromate, ammonium persulfate, sodium persulfate, sodium perborate, sodium percarbonate, calcium peroxide, magnesium peroxide, sodium periodate, an alkaline earth metal percarbonate, an alkaline earth metal perborate, an alkaline earth metal peroxide, an alkaline earth metal perphosphate, a zinc peroxide, a zinc perphosphate, a zinc perborate, a zinc percarbonate, a boron compound, a perborate, a peroxide, a perphosphate, or combinations thereof. In an embodiment, the breaker comprises sodium bromate, ammonium persulfate, sodium persulfate, sodium perborate, sodium percarbonate, calcium peroxide, magnesium peroxide, sodium periodate, or combinations thereof.

In an aspect, the high temperature well treatment fluid can include a pH buffer. The pH buffer of the present invention helps maintain a low pH of the high temperature well treatment fluid in a range of 4.5 to 5.25. In another aspect, the pH buffer comprises acetic acid and sodium acetate. In another aspect, the pH buffer comprises acetic acid, sodium acetate, formic acid, or combinations thereof. The amount of pH buffer that is needed is the amount that will effectively maintain a pH of the high temperature well treatment fluid in a range of 4.5 to 5.25; or alternatively, in a range of 4.75 to 5; or alternatively, 5. In an aspect, the pH buffer is a true pH buffer, as opposed to a pH adjuster, as will be understood by those of skill in the art.

At temperatures above 400°F (204.4°C), a pH buffer comprising acetic acid and sodium acetate having a pH of 5 at 25% can be used. At temperatures below 400°F (204.4°C), other pH buffers can be used, such as acetic acid and formic acid buffers. Generally, any pH buffer capable of maintaining a pH of the high temperature well treatment fluid within in a range of 4.5 to 5.25 can be used and without interfering with the remaining components of the high temperature well treatment fluids. Other suitable pH buffers will be apparent to those of skill in the art and are to be considered within the scope of the present invention.

The pH buffer comprising acetic acid and sodium acetate having a pH of 5 can be used in a concentration ranging from 1 gallon (4.55 litres) per 1000 gallons (3785 litres) high temperature well treatment fluid to 3 gallons (13.6 litres) per 1000 gallons (3785 litres) high temperature well treatment fluid, depending upon the temperature of the subterranean formation.

Besides phenothiazine, the electron donating compound of the present invention can also include other compounds that are suitable for use as a secondary stabilizer. The electron donating compound functions as a stabilizer that is capable of stabilizing well treatment fluids at temperatures above what conventional stabilizers are capable of doing. Secondary stabilizers (i.e., conventional stabilizers) can be used to help the high temperature well treatment fluids perform for extended periods of time by acting as an oxygen scavenger. Secondary stabilizers can also help reduce hydrolysis, which can be a problem at temperatures greater than 400°F (204.4°C).

One manner in which the electron donating compounds assist in extending run times of high temperature well treatment fluids is by maintaining the viscosity of the high temperature well treatment fluid for longer periods of time than the high temperature well treatment fluid would be capable of doing without the electron donating compound stabilizer. The secondary stabilizers can be used to help boost the stabilizing ability of the electron donating compound comprising phenothiazine, particularly at temperatures greater than 400°F (204.4°C).

In an aspect, the electron donating compound can include a secondary stabilizer comprising sodium thiosulfate. A suitable secondary stabilizer that contains sodium thiosulfate is commercially available as GS-1L from BJ Services Company. Other suitable secondary stabilizers and effective amounts of such secondary stabilizers will be apparent to those of skill in the art and are to be considered within the scope of the present invention. In general, any secondary stabilizer compound capable of reducing or scavenging oxygen in the high temperature well treatment fluid long enough to perform the well treatment process (e.g., fracturing process) can be used. The amount of secondary stabilizer that can be used includes an effective amount that is capable of reducing or scavenging oxygen of the high temperature well treatment fluid long enough to perform the well treatment process (e.g., fracturing process).

Additional additives can be added to the high temperature well treatment fluid, as needed and as will be apparent to those of skill in the art. For example, proppant can be included within the high temperature well treatment fluid in embodiments of the present invention.

As another embodiment of the present invention, a method for treating a well penetrating a subterranean formation having a temperature of up to 500°F (260°C) is provided. In this embodiment, a high temperature well treatment fluid is contacted with at least a portion of the subterranean formation. The high temperature well treatment fluid comprises a polymeric gel and an electron donating compound comprising phenothiazine. The electron donating compound comprising phenothiazine prevents thermal degradation of the polymeric gel at temperatures of up to 500°F (260°C). In an aspect, the electron donating compound comprising phenothiazine can be present in a range of 100 ppm to 250 ppm of the high temperature well treatment fluid; alternatively, in a range of 110 ppm to 200 ppm; alternatively, in a range of 120 ppm to 150 ppm; or alternatively, in a range of 120 ppm to 140 ppm.

The method embodiments of the present invention can be used on various types of high temperature well treatment fluids. For example, in an aspect, the high temperature well treatment fluid can be a hydraulic fracturing fluid. In another aspect, the high temperature well treatment fluid can be a completion fluid. In another aspect, the high temperature well treatment fluid can be a workover fluid. It is believed that embodiments of the present invention will perform adequately in drilling, completion operations, and workover operations that typically use a comparable composition that is used in fracturing operations. For example, multi-viscous fluids are sometimes used for both completion operations and fracturing operations. It is believed that the electron donating compound comprising phenothiazine would be suitable in such applications.

As indicated previously, the polymeric gels, pH buffers, breakers, secondary stabilizers, and other additives can be used in the method embodiments described herein. Other suitable additives for high temperature well treatment fluids, such as a proppant, will be apparent to those of skill in the art and are to be considered within the scope of the present invention.

A method of fracturing a subterranean formation having a temperature of up to 500°F (260°C) is provided as another embodiment of the present invention. In this embodiment, water is contacted with a high temperature well treatment fluid comprising a polymeric gel and an electron donating compound comprising phenothiazine. At least a portion of the subterranean formation is contacted with the water and the high temperature well treatment fluid at pressures sufficient to form fractures in the formation. In this embodiment, the electron donating compound is present in an effective polymeric gel stabilizing amount that prevents thermal degradation of the polymeric gel at temperatures of up to 500°F (260°C). In an aspect, the electron donating compound is present in a range of 100 ppm to 250 ppm of the high temperature well treatment fluid; alternatively, in a range of 110 ppm to 200 ppm; alternatively, in a range of 120 ppm to 150 ppm; or alternatively, in a range of 120 ppm to 140 ppm.

Care should be taken in using the compositions and methods described herein to not over-stabilize the well treatment fluid because it must be broken down to remove the well treatment fluid from the wellsite at the end of the well treatment process. Typically, operators try to stabilize the well treatments for as long as possible. The high temperature electron donating compound stabilizers of the present invention perform so well at stabilizing well treatment fluids, a balance is needed to ensure that the stabilizer comprising phenothiazine adequately stabilizes the well treatment fluid, while ensuring that the operator will be able to remove the well treatment fluid easily at the end of the treatment.

The methods and compositions of the present invention do not require any new or additional equipment. Traditional well treatment fluid equipment can be used without any modification. The methods and compositions of the present invention can be used in subterranean formations having higher temperatures than many prior art well treatment fluids are capable of functioning properly.

The invention is further illustrated in the following examples. The abbreviation ppt means pounds per short ton and defines a proportion corresponding to 0.5 grams per kg. The abbreviation gpt means grams per short ton and defines a proportion corresponding to 0.5 mg per kg.

### EXAMPLES

### Example 1 (Reference)

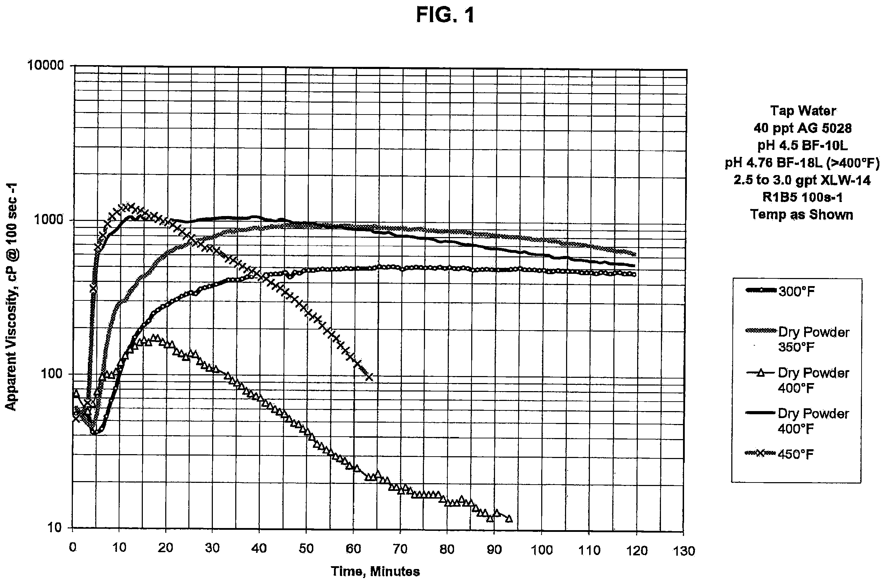

Samples of the high temperature well treatment fluid were prepared by mixing 40 pounds (18 kg) of copolymer derived from acrylamide and acrylamidomethylpropanesulfonic acid in one thousand gallons (ppt) tap water and allowed to hydrate for 30 minutes. A suitable copolymer that was used in this example is commercially available as Allessan® AG 5028P from Allessa Chemie. The order of addition of the additives is as it appears in FIG. 1. As shown in FIG. 1, the apparent viscosity in centipoises (cP) was measured and plotted for the high temperature well treatment fluid at temperatures ranging from 300°F (148.9°C) to 500°F (260°C) using a R₁B₅ bob and cup combination against time in minutes. FIG. 1 shows stability of the high temperature well treatment fluid of the present invention without the use of breakers. The pH was controlled using two different pH buffers. As indicated in FIG. 1, some of the samples were added as a dry powder to the fracturing fluid, while others were prepared in an emulsion. A pH of 4.5 with acetic acid (BF-10L by BJ Services Company) was used in the samples up to 400°F (204.4°C). A pH of 4.76 with a true buffer of pH 4.5 (BF-18L by BJ Services Company) was used in the samples that were greater than 400°F (204.4°C). 2.5 to 3.0 gpt of a zirconate-based crosslinking agent (XLW-14 by BJ Services Company) was used in the samples. Two samples were made and measured at 400 °F (204.4°C), one of the samples was prepared with 0.06 wt. % sodium thiosulfate gel stabilizer and the other sample was prepared without the stabilizer. As can be seen in FIG. 1, the sample at 400°F (204.4°C) with the stabilizer performed much better than the sample without the stabilizer, i.e., it maintained its viscosity for a longer period of time than the sample without the stabilizer.

### Example 2 (Reference)

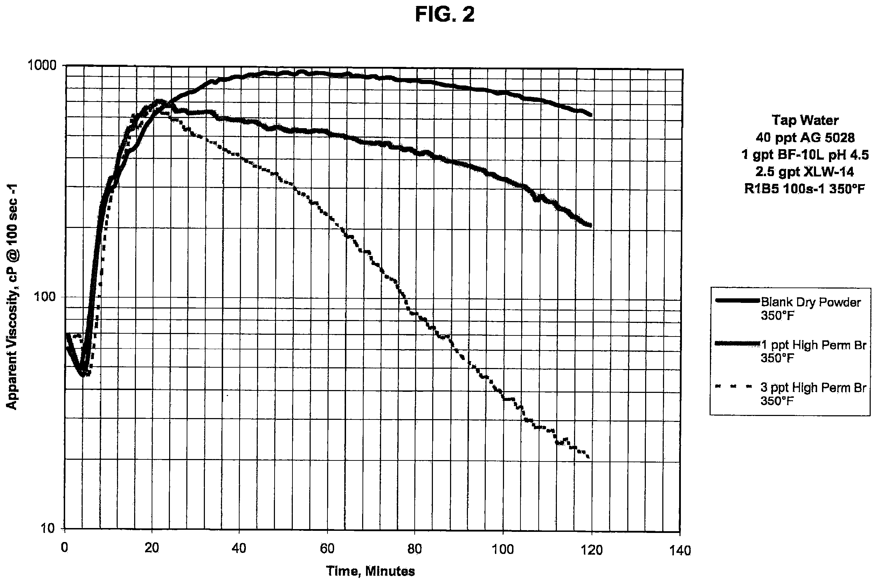

Three samples of the high temperature well treatment fluid were prepared by mixing 40 pounds (18 kg) of copolymer derived from acrylamide, acrylamidomethylpropanesulfonic acid, and vinyl phosphonate in one thousand gallons tap water (Allessan® AG 5028P from Allessa Chemie) and allowed to hydrate for 30 minutes. The order of addition of the additives is as it appears in FIG. 2. As shown in FIG. 2, the apparent viscosity was measured and plotted for the high temperature well treatment fluid at 350°F (176.7°C) using a R₁B₅ bob and cup combination against time in minutes. The pH was controlled usingof acetic acid to pH 4.5 (e.g., BF-10L by BJ Services Company). 2.5 gallons per 1000 gallons (3785 litres) high temperature well treatment fluid of a zirconate-based crosslinking agent (e.g., XLW-14 by BJ Services Company) was used in the samples. The first sample was made without the use of a breaker. The second and third samples were prepared with one and three ppt respectively of an encapsulated sodium bromate labeled as High Perm Br in FIG. 2 (High Perm BR™ Gel Breaker from BJ Services Company). As can be seen in FIG. 2, the viscosity tapers off at a consistent rate with each of the samples that contain the sodium bromate breaker, which indicates that the high temperature well treatment fluid can be degraded in a controlled manner. The viscosity of the second sample with 1 ppt breaker decreased slower than the viscosity of the third sample having 3 ppt breaker.

### Example 3 (Reference)

Three samples of the high temperature well treatment fluid were prepared by mixing varying amounts of copolymer derived from acrylamide, acrylamidomethylpropanesulfonic acid, and vinyl phosphonate with tap water (Allessan® AG 5028P with a built in stabilizer from Allessa Chemie) and allowed to hydrate for 30 minutes. The components, order of addition, and conditions in this example are as follows:

| Component/Condition | Sample 1 | Sample 2 | Sample 3 |
|---|---|---|---|
| Copolymer (AG 5028P), ppt | 25 | 40 | 50 |
| Gel stabilizer (GS-1L), gpt | 1 | 2 | 2 |
| Buffer (BF-65L), gpt | 1 | 1.5 | 2 |
| Crosslinking agent (XLW-65), gpt | 1.5 | 1.5 | 2 |
| Temperature, °F (°C) | 350 (176.7) | 400 (204.4) | 450 (232.2) |

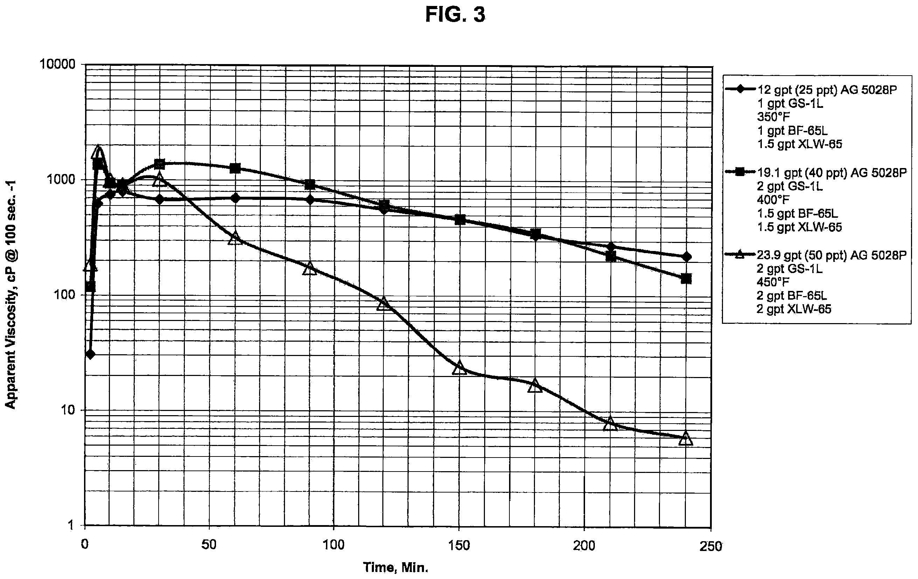

The gel stabilizer GS-1L, buffer BF-65L, and crosslinking agent XLW-65 are all commercially available from BJ Services Company. As shown in FIG. 3, the apparent viscosity was measured and plotted for the high temperature well treatment fluid at temperatures ranging from 350°F (176.7°C) to 450°F (232.2°C) using a R₁B₅ bob and cup combination against time in minutes. The pH was controlled using a true 5.0 pH buffer (e.g., BF-65L by BJ Services Company). As can be seen in FIG. 3, the viscosity tapers off at a consistent rate with each of the samples, which indicates that the high temperature well treatment fluid can be stable for an extended period of time and still be degraded in a controlled manner.

### Example 4 (Reference)

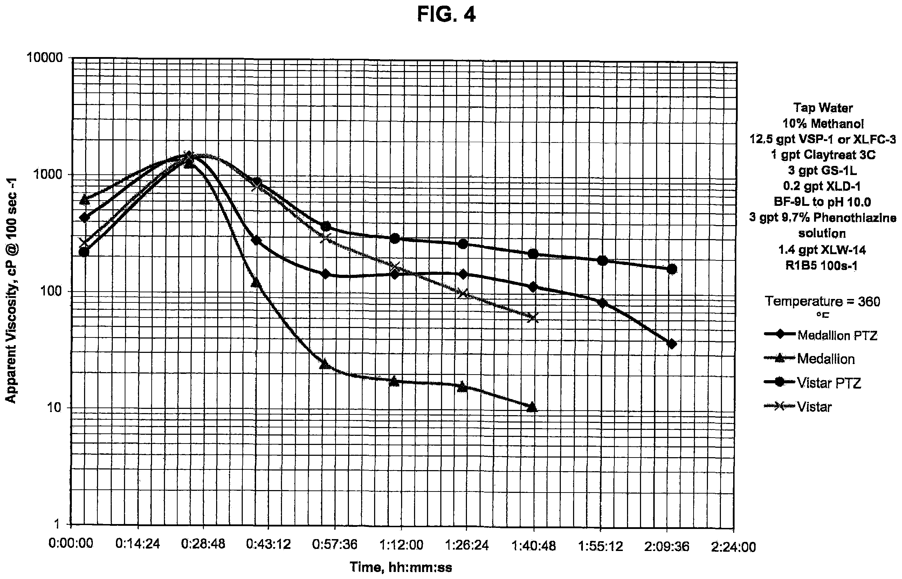

The electron donating compound comprising phenothiazine was mixed at 360°F (182.2°C) with two guar-based fracturing fluids that are commercially available under the commercial names Medallion Frac HT® and Vistar® from BJ Services Company. In addition order, tap water, 10 wt. % methanol, 12.5 gpt of the (slurried polymer XLFC-3 or VSP-1 by BJ Services Company respectively for Medallion Frac HT® and Vistar®) 1 gpt Claytreat-3C clay stabilizer (CT-3C) by BJ Services Company, 3 gpt stabilizer (GS-1L) by BJ Services Company, 0.2 gpt crosslink delay agent (XLD-1) by BJ Services Company, and 1.4 gpt zirconate-based crosslinker (XLW-14) by BJ Services Company were mixed with 50 ppt of the fracturing fluid to produce the samples. The pH of the Medallion Frac HT® system was 10 and the pH of the Vistar® system was 10.25. The concentration of the electron donating compound comprising phenothiazine was 120 ppm in the fracturing fluid, i.e., 3 gpt 9.7 wt. % in dipropylene glycol methyl ether (ARCOSOLVE™ DPM) by Lyondell Chemical. As can be seen in FIG. 4, Medallion Frac HT® fluid and Vistar® fluid performed better with the stabilizing electron donating compound comprising phenothiazine added to them than without it at 360 °F (182.2 °C). The viscosity of the fracturing fluids was maintained without substantial degradation for at least 25 minutes longer than without the electron donating compound comprising phenothiazine added to it.

### Example 5

Three samples were prepared in this example. The first sample was the control sample. In the second and third samples, the electron donating compound stabilizer comprising phenothiazine was mixed at varying amounts at 400°F (204.4°C) with 40 ppt high molecular weight polymer-based fracturing fluid comprising a copolymer derived from acrylamide. A suitable copolymer that was used in this example is commercially available as Allessan® AG 5028P from Allessa Chemie. The pH of the samples prepared in this example was 5. In addition order, tap water, 10 wt. % methanol, 19.1 gpt of the polymer emulsion, 1 gpt Claytreat-3C clay stabilizer (CT-3C) by BJ Services Company, 3 gpt stabilizer (GS-1L) by BJ Services Company, 2.0 gpt zirconate-based crosslinker (XLW-65) by BJ Services Company and 2 gpt low pH buffer (BF-65L) by BJ Services Company were mixed to produce the samples. The high molecular weight polymer-based fracturing fluid was made in accordance with methods described herein. Along with the polymer, a secondary stabilizer that is commercially available as GS-1L from BJ Services Company, an acetic acid sodium acetate buffer that maintains a pH of 5, and a crosslinking agent commercially available as XLW-65 from BJ Services Company were used to create the fracturing fluid.

The first sample contained 3 gpt GS-1L stabilizer, 2 gpt acetic acid sodium acetate buffer, and 2 gpt XLW-65 from BJ Services Company crosslinking agent, with no electron donating compound stabilizer comprising phenothiazine. The electron donating compound stabilizer comprising phenothiazine was added to the second and third samples of the polymer-based fracturing fluid at a concentration of 2 gallons (9 litres) per 1000 gallons (3785 litres) fracturing fluid and 4 gallons per 1000 gallons (3785 litres) fracturing fluid respectively. The phenothiazine was saturated in a toluene solvent (in 3 - 4 wt. % solution) to aid in delivering the phenothiazine to the fracturing fluid. Besides the 2 gpt phenothiazine, the second sample contained 3 gpt GS-1L stabilizer, 2 gpt acetic acid sodium acetate-pH buffer, and 2 gpt XLW-65crosslinking agent. The third sample contained 2 gpt GS-1L stabilizer, 3 gpt acetic acid sodium acetate-pH buffer, and 2 gpt XLW-65 crosslinking agent, in addition to the 4 gpt phenothiazine.

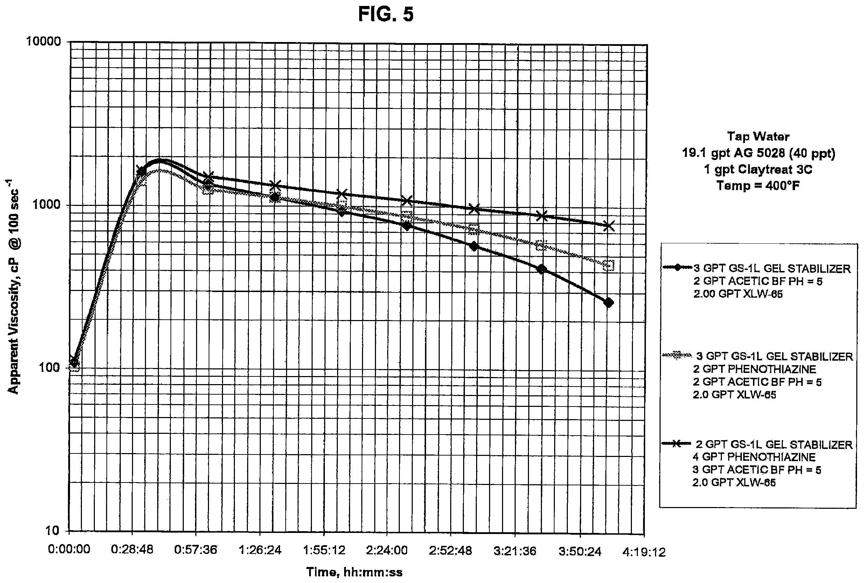

As can be seen in FIG. 5, the polymer-based fracturing fluid performed much better with the electron donating compound stabilizer comprising phenothiazine added to it than without it. The viscosity of the fracturing fluids was maintained at higher values than without the electron donating compound stabilizer comprising phenothiazine added to it. The third sample maintained its viscosity the longest out of the three samples. The more phenothiazine-containing electron donating compound stabilizer that was in the sample, the more stable the fracturing fluid in this example.

### Example 6

Five samples were prepared in this example. The first top sample was the control sample at 400°F (204°C). In the remaining samples, the electron donating compound stabilizer comprising phenothiazine was mixed at varying amounts at 400°F (204.4°C) with 40 ppt or 50 ppt high molecular weight polymer-based fracturing fluid comprising a copolymer derived from acrylamide, as indicated in Table 1. A suitable copolymer that was used in this example is commercially available as Allessan® AG 5028P from Allessa Chemie. The components, addition order, and conditions in this example are as follows:

| Table 1 | | | | | |
|---|---|---|---|---|---|
| Component/Condition | Sample 1 | Sample 2 | Sample 3 | Sample 4 | Sample 5 |
| Copolymer (AG 5028P), ppt | 40 | 40 | 40 | 40 | 50 |
| Gel stabilizer (GS-1L), gpt | 3 | 3 | 2 | 2 | 1.5 |
| Buffer, gpt | 2 | 2 | 3 | 3 | 2 |
| Crosslinking agent (XLW-65), gpt | 2 | 2 | 2 | 2 | 2 |
| Stabilizer, gpt | - | 2 | 4 | 4 | 4 |
| Temperature, °F (°C) | 400 | 400 | 400 | 425 | 450 |

The samples were allowed to hydrate for 30 minutes. The pH of the samples prepared in this example was 5. The high molecular weight polymer-based fracturing fluid was made in accordance with methods described herein. As shown in Table 1, along with the polymer, a secondary stabilizer that is commercially available as GS-1L from BJ Services Company, an acetic acid pH buffer that maintains a pH of 5, and a crosslinking agent commercially available as XLW-65 from BJ Services Company were used to create the fracturing fluid.

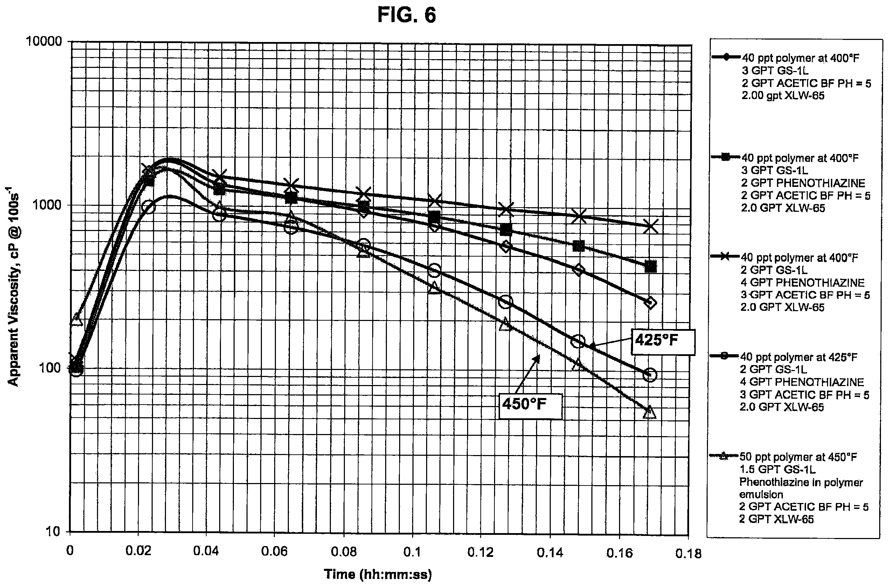

As can be seen in FIG. 6, the polymer-based fracturing fluid performed much better with the electron donating compound stabilizer comprising phenothiazine added to it than without it. The viscosity of the fracturing fluids was maintained at higher values than without the electron donating compound stabilizer comprising phenothiazine added to it. The third sample maintained its viscosity the longest out of the three samples at 400°F (204.4 °C). The more phenothiazine-containing electron donating compound stabilizer that was in the sample, the more stable the fracturing fluid in this example.

It will be appreciated that modifications may be made to the embodiments described above without departing from the invention, the scope of which is defined in the accompanying claims.

## Claims

1. A high temperature well treatment fluid for fracturing a subterranean formation having a temperature up to 500°F (260°C), the fluid comprising:
(a) water;
(b) a high molecular weight copolymer derived from acrylamide, acrylamidomethylpropanesulfonic acid, and vinyl phosphonate;
(c) a crosslinking agent;
(d) a pH buffer that maintains a pH of the high temperature well treatment fluid in a range of 4.5 to 5.25; and
(e) a stabilizer which is an electron-donating compound selected from phenothiazine, phenothiazine derivatives and combinations thereof, or a stabilizer as aforesaid together with a secondary stabilizer comprising sodium thiosulfate.

2. The fluid of claim 1, comprising an emulsion containing 25 wt% of the copolymer, said emulsion being present in a range of 10 gallons (38 liters) per 1,000 gallons (3800 liters) of fluid to 25 gallons (95litres) per 1,000 gallons (3800 liters) of fluid.

3. The fluid of claim 1 or 2, wherein:
(a) the acrylamide is present in the copolymer in a range of 30 wt. % to 80 wt. %;
(b) the acrylamidomethylpropanesulfonic acid is present in the copolymer in a range of 20 wt. % to 50 wt. %; and
(c) the vinyl phosphonate is present in the copolymer in a range of 1 wt. % to 5 wt. %.

4. The fluid of claim 1, 2 or 3, wherein the monomers of said copolymer further include any of:
an alkali metal salt of acrylamidomethylpropanesulfonic acid;
an ammonium salt of acrylamidomethylpropanesulfonic acid;
styrene sulfonate;
vinyl sulfonate;
N-vinylpyrolidone;
N-vinylformamide;
N-vinylacetamide;
N,N-diallylacetamide;
methacrylamide;
acrylamide;
N,N-dimethylacrylamide;
Ca²⁺; Mg²⁺ and combinations thereof.

5. The fluid of any preceding claim, wherein the copolymer has a K-value of greater than 375.

6. The fluid of any preceding claim, wherein the crosslinking agent is selected from the group consisting of:
zirconium oxychloride;
zirconium acetate;
zirconium lactate;
zirconium malate;
zirconium glycolate;
zirconium triethanolamine;
zirconium lactate triethanolamine;
zirconium citrate;
titanium lactate;
titanium malate;
titanium citrate; and combinations thereof.

7. The fluid of any preceding claim, wherein the pH buffer comprises acetic acid, sodium acetate, formic acid, or combinations thereof and is present in a range of 1 gallon (3.8 liters) per 1,000 gallons (3800 liters) high temperature well treatment fluid to 3 gallons (11 liters) per 1,000 gallons (3800 liters) high temperature well treatment fluid

8. The fluid of any preceding claim, wherein the stabiliser comprises a phenothiazine present in a range of 100 ppm to 250 ppm of the high temperature well treatment fluid.

9. The fluid of any preceding claim, wherein said phenothiazine comprises unsubstituted phenothiazine or a hydrochloride thereof.

10. The fluid of any preceding claim, wherein said phenothiazine comprises any of the following derivatives:
unsubstituted phenothiazine 5-oxide;
an unsubstituted phenothiazine hydrohalogenide;
an alkyl-substituted phenothiazine;
an aryl-substituted phenothiazine;
an aroyl-substituted phenothiazine;
a carboxyl-substituted phenothiazine;
a halogen-substituted phenothiazine;
an N-(dialkylaminoalkyl)-substituted phenothiazine;
an alkyl-substituted phenothiazine-5-oxide;
an aryl-substituted phenothiazine-5-oxide;
an aroyl-substituted phenothiazine-5-oxide;
a carboxyl-substituted phenothiazine-5-oxide;
a halogen-substituted phenothiazine-5-oxide;
a N-(dialkylaminoalkyl)-substituted phenothiazine-5-oxide;
3-phenylphenothiazine;
N-phenylphenothiazine;
10,10'-diphenylphenothiazine;
n-benzoylphenothiazine;
7-benzoylphenothiazine;
3,7-difluorophenothiazine;
N-ethylphenothiazine;
2-acetylphenothiazine;
3,7-dioctylphenothiazine;
N-methylphenothiazine-5 -oxide;
N-acetylphenothiazine;
N-(2-diethylaminoethyl)-phenothiazine;
N-(2-dimethylaminopropyl)-phenothiazine;
N-(2-dimethylaminopropylphenothiazine)-hydrochloride;
N-octadecylphenothiazine;
N-propylphenothiazine;
a hydrochloride of any of the above compounds;
a combination of any of the above compounds; or
a combination of any of the above
compounds with unsubstutited phenothiazine.

11. The fluid of any preceding claim, further comprising a breaker that allows the high temperature well treatment fluid to be broken down in a controlled manner, the breaker comprising sodium bromate, ammonium persulate, sodium persulfate, sodium perborate, sodium percarbonate, calcium peroxide, magnesium peroxide, sodium periodate, an alkaline earth metal percarbonate, an alkaline earth metal perborate, an alkaline earth metal peroxide, an alkaline earth metal perphosphate, a zinc peroxide, a zinc perphosphate, a zinc perborate, a zinc percarbonate, a boron compound, a perborate, a peroxide, a perphosphate, or combinations thereof

12. The fluid of any preceding claim, further comprising a proppant.

13. A method for treating a well penetrating a subterranean formation having a temperature of up to 500 °F (260 °C) comprising the step of contacting a high temperature well treatment fluid as defined in any preceding claim with at least a portion of the subterranean formation.

14. The method of claim 13, wherein the high temperature well treatment fluid is pumped for up to 2 hours into a subterranean formation having a temperature of up to 500 °F (260 °C).

15. The method of claim 13 or 14, being for fracturing the formation, and the method comprising the step of contacting the high temperature well treatment fluid with at least a portion of the subterranean formation at a pressure sufficient to fracture the subterranean formation.

## Patentansprüche

1. Hochtemperaturbohrlochbehandlungsfluid zum Aufbrechen von einer unterirdischen Formation, die eine Temperatur von bis zu 500 °F (260 °C) aufweist, wobei das Fluid das Folgende umfasst:
(a) Wasser;
(b) ein Copolymer mit hohem Molekulargewicht, das sich von Acrylamid, Acrylamidomethylpropansulfonsäure und Vinylphosphonat ableitet;
(c) ein Vernetzungsmittel;
(d) einen pH-Puffer, der einen pH von dem Hochtemperaturbohrlochbehandlungsfluid in einem Bereich von 4,5 bis 5,25 aufrechterhält; und
(e) einen Stabilisator, der eine Elektronendonorverbindung ist, die aus Phenothiazin, Phenothiazinderviaten und Kombinationen davon ausgewählt ist, oder einen Stabilisator wie den vorgenannten zusammen mit einem zweiten Stabilisator, der Natriumthiosulfat umfasst.

2. Fluid nach Anspruch 1, umfassend eine Emulsion, die 25 Gew.-% von dem Copolymer umfasst, wobei die Emulsion in einem Bereich von 10 Gallonen (38 Liter) pro 1000 Gallonen (3800 Liter) des Fluids bis 25 Gallonen (95 Liter) pro 1000 Gallonen (3800 Liter) des Fluids vorliegt.

3. Fluid nach Anspruch 1 oder 2, wobei:
(a) das Acrylamid in dem Copolymer in einem Bereich von 30 Gew.-% bis 80 Gew.-% vorliegt;
(b) die Acrylamidomethylpropansulfonsäure in dem Copolymer in einem Bereich von 20 Gew.-% bis 50 Gew.-% vorliegt; und
(c) das Vinylphosphonat in dem Copolymer in einem Bereich von 1 Gew.-% bis 5 Gew.-% vorliegt.

4. Fluid nach Anspruch 1, 2 oder 3, wobei die Monomere von dem Copolymer ferner irgendeines aus den Folgenden umfassen:
ein Alkalimetallsalz von Acrylamidomethylpropansulfonsäure;
ein Ammoniumsalz von Acrylamidomethylpropansulfonsäure;
Styrolsulfonat;
Vinylsulfonat;
N-Vinylpyrolidon;
N-Vinylformamid;
N-Vinylacetamid;
N,N-Diallylacetamid;
Methacrylamid;
Acrylamid;
N,N-Dimethylacrylamid;
Ca²⁺; Mg²⁺ und Kombinationen davon.

5. Fluid nach einem der vorhergehenden Ansprüche, wobei das Copolymer einen K-Wert von mehr als 375 hat.

6. Fluid nach einem der vorhergehenden Ansprüche, wobei das Vernetzungsmittel aus der Gruppe ausgewählt ist, bestehend aus:
Zirkoniumoxychlorid;
Zirkoniumacetat;
Zirkoniumlactat;
Zirkoniummalat;
Zirkoniumglycolat;
Zirkoniumtriethanolamin;
Zirkoniumlactattriethanolamin;
Zirkoniumcitrat;
Titanlactat;
Titanmalat;
Titancitrat; und Kombinationen davon.

7. Fluid nach einem der vorhergehenden Ansprüche, wobei der pH-Puffer Essigsäure, Natriumacetat, Ameisensäure oder Kombinationen davon umfasst und in einem Bereich von 1 Gallone (3,8 Liter) pro 1000 Gallonen (3800 Liter) des Hochtemperaturbohrlochbehandlungsfluids bis 3 Gallonen (11 Liter) pro 1000 Gallonen (3800 Liter) des Hochtemperaturbohrlochbehandlungsfluids vorliegt.

8. Fluid nach einem der vorhergehenden Ansprüche, wobei der Stabilisator ein Phenothiazin umfasst, das in einem Bereich von 100 ppm bis 250 ppm des Hochtemperaturbohrlochbehandlungsfluids vorliegt.

9. Fluid nach einem der vorhergehenden Ansprüche, wobei das Phenothiazin unsubstituiertes Phenothiazin oder ein Chlorhydrat davon umfasst.

10. Fluid nach einem der vorhergehenden Ansprüche, wobei das Phenothiazin irgendeines aus den folgenden Derivaten umfasst:
unsubstituiertes Phenothiazin-5-oxid;
ein unsubstituiertes Phenothiazinhydrohalogenid;
ein alkylsubstituiertes Phenothiazin;
ein arylsubstituiertes Phenothiazin;
ein aroylsubstituiertes Phenothiazin;
ein carboxylsubstituiertes Phenothiazin;
ein halogensubstituiertes Phenothiazin;
ein N-(Dialkylaminoalkyl)-substituiertes Phenothiazin;
ein alkylsubstituiertes Phenothiazin-5-oxid;
ein arylsubstituiertes Phenothiazin-5-oxid;
ein aroylsubstituiertes Phenothiazin-5-oxid;
ein carboxylsubstituiertes Phenothiazin-5-oxid;
ein halogensubstituiertes Phenothiazin-5-oxid;
ein N-(Dialkylaminoalkyl)-substituiertes Phenothiazin-5-oxid;
3-Phenylphenothiazin;
N-Phenylphenothiazin;
10,10'-Diphenylphenothiazin;
n-Benzoylphenothiazin;
7-Benzoylphenothiazin;
3,7-Difluorphenothiazin;
N-Ethylphenothiazin;
2-Acetylphenothiazin;
3,7-Dioctylphenothiazin;
N-Methylphenothiazin-5-oxid;
N-Acetylphenothiazin;
N-(2-Diethylaminoethyl)-phenothiazin;
N-(2-Dimethylaminopropyl)-phenothiazin;
N-(2-Dimethylaminopropylphenothiazin)-hydrochlorid;
N-Octadecylphenothiazin;
N-Propylphenothiazin;
ein Chlorhydrat von einer der oben genannten Verbindungen;
eine Kombination aus irgendeiner der oben genannten Verbindungen; oder
eine Kombination aus irgendeiner der oben genannten Verbindungen mit unsubstituiertem Phenothiazin.

11. Fluid nach einem der vorhergehenden Ansprüche, ferner umfassend einen Brecher, der es erlaubt, dass das Hochtemperaturbohrlochbehandlungsfluid auf eine kontrollierte Weise abgebaut wird, wobei der Brecher Natriumbromat, Ammoniumpersulfate, Natriumpersulfat, Natriumperborat, Natriumpercarbonat, Calciumperoxid, Magnesiumperoxid, Natriumperiodat, ein Erdalkalimetall-Percarbonat, ein Erdalkalimetall-Perborat, ein Erdalkalimetall-Peroxid, ein Erdalkalimetall-Perphosphat, ein Zinkperoxid, ein Zinkperphosphat, ein Zinkperborat, ein Zinkpercarbonat, eine Borverbindung, ein Perborat, ein Peroxid, ein Perphosphat oder Kombinationen davon umfasst.

12. Fluid nach einem der vorhergehenden Ansprüche, ferner umfassend ein Proppant.

13. Verfahren zum Behandeln von einem Bohrloch, das in eine unterirdische Formation eindringt, die eine Temperatur von bis zu 500 °F (260 °C) aufweist, umfassend den Schritt des In-Kontakt-Bringens von einem Hochtemperaturbohrlochbehandlungsfluid nach einem der vorhergehenden Ansprüche mit mindestens einem Teil von der unterirdischen Formation.

14. Verfahren nach Anspruch 13, wobei das Hochtemperaturbohrlochbehandlungsfluid für bis zu 2 Stunden in eine unterirdische Formation gepumpt wird, die eine Temperatur von bis zu 500 °F (260 °C) aufweist.

15. Verfahren nach Anspruch 13 oder 14, das zum Aufbrechen der Formation dient und wobei das Verfahren den Schritt des In-Kontakt-Bringens von dem Hochtemperaturbohrlochbehandlungsfluid mit mindestens einem Teil von der unterirdischen Formation mit einem Druck umfasst, der ausreichend ist, um die unterirdische Formation aufzubrechen.

## Revendications

1. Fluide de traitement de puits haute température destiné à fracturer une formation souterraine ayant une température allant jusqu'à 500 °F (260 °C), le fluide comprenant :
(a) de l'eau ;
(b) un copolymère de haute masse moléculaire dérivé d'acrylamide, d'acide acrylamidométhylpropanesulfonique, et de phosphonate de vinyle ;
(c) un agent de réticulation ;
(d) un tampon pH qui maintient un pH du fluide de traitement de puits haute température dans une plage de 4,5 à 5,25 ; et
(e) un stabilisateur qui est un composé électro-donneur choisi parmi la phénothiazine, les dérivés de phénothiazine et leurs combinaisons, ou un stabilisateur tel que précité conjointement avec un stabilisateur secondaire comprenant du thiosulfate de sodium.

2. Fluide selon la revendication 1, comprenant une émulsion contenant 25 % en poids du copolymère, ladite émulsion étant présente dans une plage de 10 gallons (38 litres) pour 1 000 gallons (3 800 litres) de fluide à 25 gallons (95 litres) pour 1 000 gallons (3 800 litres) de fluide.

3. Fluide selon la revendication 1 ou 2, dans lequel :
(a) l'acrylamide est présent dans le copolymère dans une plage de 30 % en poids à 80 % en poids ;
(b) l'acide acrylamidométhylpropanesulfonique est présent dans le copolymère dans une plage de 20 % en poids à 50 % en poids ; et
(c) le phosphonate de vinyle est présent dans le copolymère dans une plage de 1 % en poids à 5 % en poids.

4. Fluide selon la revendication 1, 2 ou 3, dans lequel les monomères dudit copolymère incluent en outre l'un quelconque parmi :
un sel de métal alcalin d'acide acrylamidométhylpropanesulfonique ;
un sel d'ammonium d'acide acrylamidométhylpropanesulfonique ;
le sulfonate de styrène ;
le sulfonate de vinyle ;
la N-vinylpyrolidone ;
le N-vinylformamide ;
le N-vinylacétamide ;
le N,N-diallylacétamide ;
la méthacrylamide ;
l'acrylamide ;
le N,N-diméthylacrylamide ;
le Ca²⁺ ; Mg²⁺ et leurs combinaisons.

5. Fluide selon une quelconque revendication précédente, dans lequel le copolymère a une valeur K de plus de 375.

6. Fluide selon une quelconque revendication précédente, dans lequel l'agent de réticulation est choisi dans le groupe consistant en :
l'oxychlorure de zirconium ;
l'acétate de zirconium ;
le lactate de zirconium ;
le malate de zirconium ;
le glycolate de zirconium ;
la triéthanolamine de zirconium ;
le lactate triéthanolamine de zirconium ;
le citrate de zirconium ;
le lactate de titane ;
le malate de titane ;
le citrate de titane ; et leurs combinaisons.

7. Fluide selon une quelconque revendication précédente, dans lequel le tampon pH comprend de l'acide acétique, de l'acétate de sodium, de l'acide formique, ou leurs combinaisons et est présent dans une plage de 1 gallon (3,8 litres) pour 1 000 gallons (3 800 litres) de fluide de traitement de puits haute température à 3 gallons (11 litres) pour 1 000 gallons (3 800 litres) de fluide de traitement de puits haute température.

8. Fluide selon une quelconque revendication précédente, dans lequel le stabilisateur comprend une phénothiazine présente dans une plage de 100 ppm à 250 ppm du fluide de traitement de puits haute température.

9. Fluide selon une quelconque revendication précédente, dans lequel ladite phénothiazine comprend de la phénothiazine non substituée ou un chlorhydrate de celle-ci.

10. Fluide selon une quelconque revendication précédente, dans lequel ladite phénothiazine comprend l'un quelconque des dérivés suivants :
phénothiazine 5-oxyde non substituée ;
un halogénohydrate de phénothiazine non substituée ;
une phénothiazine alkyle-substituée ;
une phénothiazine aryle-substituée ;
une phénothiazine aroyle-substituée ;
une phénothiazine carboxyle-substituée ;
une phénothiazine halogène-substituée ;
une phénothiazine N-(dialkylaminoalkyle)-substituée ;
un phénothiazine-5-oxyde alkyle-substitué ;
un phénothiazine-5-oxyde aryle-substitué ;
un phénothiazine-5-oxyde aroyle-substitué ;
un phénothiazine-5-oxyde carboxyle-substitué ;
un phénothiazine-5-oxyde halogène-substitué ;
un phénothiazine-5-oxyde N-(dialkylamino)-substitué ;
la 3-phénylphénothiazine ;
la N-phénylphénothiazine ;
la 10,10'-diphénylphénothiazine ;
la n-benzoylphénothiazine ;
la 7-benzoylphénothiazine ;
la 3,7-difluorophénothiazine ;
la N-éthylphénothiazine ;
la 2-acétylphénothiazine ;
la 3,7-dioctylphénothiazine ;
le N-méthylphénothiazine-5-oxyde ;
la N-acétylphénothiazine ;
la N-(2-diéthylaminoéthyl)-phénothiazine ;
la N-(2-diméthylaminopropyl)-phénothiazine ;
le chlorhydrate de N-(2-diméthylaminopropylphénothiazine) ;
la N-octadécylphénothiazine ;
la N-propylphénothiazine ;
un chlorhydrate de l'un quelconque des composés ci-dessus ;
une combinaison de l'un quelconque des composés ci-dessus ; ou
une combinaison de l'un quelconque des composés ci-dessus avec de la phénothiazine non substituée.

11. Fluide selon une quelconque revendication précédente, comprenant en outre un agent de dissociation qui permet de dissocier le fluide de traitement de puits haute température de manière contrôlée, l'agent de dissociation comprenant du bromate de sodium, du persulfate d'ammonium, du persulfate de sodium, du perborate de sodium, du percarbonate de sodium, du peroxyde de calcium, du peroxyde de magnésium, du périodate de sodium, un percarbonate de métal alcalinoterreux, un perborate de métal alcalinoterreux, un peroxyde de métal alcalinoterreux, un perphosphate de métal alcalinoterreux, un peroxyde de zinc, un perphosphate de zinc, un perborate de zinc, un percarbonate de zinc, un composé de bore, un perborate, un peroxyde, un perphosphate, ou leurs combinaisons.

12. Fluide selon une quelconque revendication précédente, comprenant en outre un agent de soutènement.

13. Procédé de traitement d'un puits pénétrant une formation souterraine ayant une température allant jusqu'à 500 °F (260 °C) comprenant l'étape de mise en contact d'un fluide de traitement de puits haute température tel que défini dans l'une quelconque des revendications précédentes avec au moins une portion de la formation souterraine.

14. Procédé selon la revendication 13, dans lequel le fluide de traitement de puits haute température est pompé pendant jusqu'à 2 heures dans une formation souterraine ayant une température allant jusqu'à 500 °F (260 °C).

15. Procédé selon la revendication 13 ou 14, qui est destiné à la fracturation de la formation, et le procédé comprenant l'étape de mise en contact du fluide de traitement de puits haute température avec au moins une portion de la formation souterraine à une pression suffisante pour fracturer la formation souterraine.
